Europäisches Patentamt

European Patent Office

Office européen des brevets

(19)

(11) Veröffentlichungsnummer: **0 278 222**
**A2**

(12) **EUROPÄISCHE PATENTANMELDUNG**

(21) Anmeldenummer: 88100195.2

(51) Int. Cl.⁴: **B01J 21/08**

(22) Anmeldetag: 08.01.88

(30) Priorität: 27.01.87 DE 3702347

(43) Veröffentlichungstag der Anmeldung:
17.08.88 Patentblatt 88/33

(84) Benannte Vertragsstaaten:
CH DE FR GB IT LI SE

(71) Anmelder: **Siemens Aktiengesellschaft Berlin und München**
**Wittelsbacherplatz 2**
**D-8000 München 2(DE)**

(72) Erfinder: **Aulich, Hubert, Dr. Ph. D.**
**Schwarzstrasse 3**
**D-8000 München 90(DE)**
Erfinder: **Urbach, Hans-Peter, Dr. rer. nat.**
**Auerfeldstrasse 16**
**D-8000 München 90(DE)**
Erfinder: **Eisenrith, Karl-Heinz**
**Triftstrasse 1**
**D-8162 Schliersee(DE)**

(54) **Heterogenes Katalysatorsystem mit porösem Siliziumdioxid-Trägermaterial.**

(57) Die Erfindung betrifft ein heterogenes Katalysatorsystem, bestehend aus einer katalytisch wirksamen Komponente und einem, eine große Oberfläche aufweisenden porösen Siliziumdioxid-Trägermaterial, sowie ein Verfahren zu seiner Herstellung, wobei das Trägermaterial ein aus Glaskörpern großer Oberfläche durch Auslaugen mit Mineralsäure hergestelltes hochreines Siliziumdioxid ist. Siliziumdioxidhaltige Materialien werden dabei mit geeigneten Zuschlägen in eine homogene Glasphase überführt und daraus die Glaskörper mit großer Oberfläche hergestellt. Nach dem Auslaugen wird ein hochreines Siliziumdioxid großer Oberfläche erhalten, das mit einer katalytisch wirksamen Komponente präpariert einen reaktiven, universell einsetzbaren und hochtemperaturbeständigen Katalysator ergibt.

| Art der Verunreinigung nach Schritt d | Gehalt an Verunreinigung im $SiO_2$ [ppm] |
|---|---|
| B | < 0,2 |
| P | < 0,3 |
| Na | < 1 |
| Mg | < 0,5 |
| Ca | < 2 |
| Al | < 10 |
| Fe | < 0,1 |
| Ti | < 1 |
| Zr | < 1 |
| V,Cr,Mn,Co, Ni,Cu | < 1 |
| Nb,Mo,Ta,W | < 0,1 |

EP 0 278 222 A2

## Heterogenes Katalysatorsystem mit porösem Siliziumdioxidträgermaterial.

Die Erfindung betrifft ein heterogenes Katalysatorsystem, bestehend aus einer katalytisch wirksamen Komponente und einem eine große Oberfläche aufweisenden porösen Silizumdioxid-Trägermaterial sowie ein Verfahren zu seiner Herstellung.

Heterogene Katalysatoren sind Materialien, die eine chemische Reaktionen beschleunigen bzw. überhaupt ermöglichen, unverändert aus der Reaktion vorgehen, sich somit (fast) nicht verbrauchen und mit den Reaktionspartnern (Substraten) keine homogene Phase bilden.

Bekannt sind zum Beispiel Katalysator/Substratsysteme fest/flüssig, fest/gasförmig, flüssig/flüssig oder flüssig/gasförmig.

Wegen der leichten Abtrennbarkeit, die eine spätere Wiederverwendung ermöglicht, werden feste heterogene Katalysatorsysteme bevorzugt. Meist bestehen diese aus einem schwer oder nicht löslichen porösen Trägermaterial und darauf fixierter katalytisch aktiver Komponente. Die Trägermaterialien müssen eine große innere Oberfläche aufweisen, da die Geschwindigkeit heterogen katalysierter Reaktionen von der spezifischen Oberfläche des Katalysatorsystems abhängig ist.

Große Verwendung finden vor allem natürlich vorkommende Materialien, wie zum Beispiel Aktivkohle, Kieselgur, Bentonite, Kaolin, Kieselgel, Bimsstein, Aluminiumsilikate oder Aluminiumoxid, wie es zum Beispiel Römpps Chemie-Lexikon (Herausgeber O.-A. Neumüller, 8. Auflage, Stuttgart), Band 3, Seiten 2052 bis 2058, zu entnehmen ist.

Der große Nachteil natürlich vorkommender Träger ist die oft mangelnde Reinheit und Inhomogenität, während künstliche Träger zumeist teurer sind als natürliche.

Ein großer Anteil der oben erwähnten Stoffe enthält Siliziumdioxid in variierenden Anteilen. Dabei nutzt man den sauren Charakter der freien Si-OH-Gruppen, die selbst eine saure Katalyse bewirken können und Reaktionen mit ionischem Charakter beeinflussen. Diese aktiven Zentren ermöglichen außerdem eine gute Fixierung anderer katalytisch wirksamer Stoffe, sowohl auf physikalischem, als auch auf chemischem Weg durch Verbindungsbildung. Handelt es sich bei den katalytisch aktiven Komponenten um leicht reduzierbare oder instabile Oxide (beispielsweise von Eisen, Kupfer oder Nickel), so zählen diese Katalysatoren zur Klasse der Redox-Katalysatoren.

Zum Einsatz in Reaktionen, die Katalysatoren mit reinem Siliziumdioxid als Trägermaterial erfordern, werden heute ausschließlich syntetisch hergestellte Siliziumdioxidmaterialien eingesetzt, die beispielsweise aus Wasserglas oder durch Flammenhydrolyse von organischen und anorganischen Siliziumverbindungen hergestellt werden.

Aufgabe der Erfindung ist es, ein breit anwendbares Katalysatorsystem anzugeben mit einem Trägermaterial aus reinem Siliziumoxid, das in einem einfachen und kostengünstigen Verfahren zu gewinnen ist, Verunreinigungen nur noch im ppm-Bereich aufweist und eine entsprechend große aktive Oberfläche besitzt.

Diese Aufgabe wird erfindungsgemäß dadurch gelöst, daß das Trägermaterial ein aus Glaskörpern großer Oberfläche durch Auslaugen mit Mineralsäure hergestelltes hochreines Siliziumdioxid ist und daß zum Herstellen des Katalysatorsystems

a) als Ausgangsmaterial siliziumdioxidhaltige Mineralien verwendet werden, die mit glasbildenden Zuschlägen durch Schmelzen in eine homogene Glasphase überführt werden,

b) aus der Glasschmelze Glaskörper großer Oberfläche hergestellt werden,

c) die Glaskörper einem Auslaugprozeß in mindestens 95°C heißer Mineralsäure unterworfen werden,

d) das entstandene poröse Material säurefrei gewaschen wird und

e) mit einer katalytisch wirksamen Komponente oder einer Vorstufe davon präpariert wird.

Weitere Ausgestaltungen der Erfindung sind den Unteransprüchen zu entnehmen.

Das Trägermaterial nach der Lehre der Erfindung weist eine hohe Reinheit auf. Außer für Aluminium (10 ppm) und Kalzium (2 ppm) liegt der Gehalt für störende Verunreinigungen jeweils unter 1 ppm. Dieses Material ist bereits zur Verwendung als saurer Katalysator geeignet. Insbesondere kann durch thermische Behandlung die Dichte der reaktiven OH-Gruppen im Trägermaterial von 6 OH/nm$^2$ kontinuierlich reduziert und somit die saure Wirkung verringert werden. Das Trägermaterial weist eine nach der BET-Methode (nach Brunauer, Emmet und Teller) bestimmte aktive Oberfläche von ca. 180 m$^2$ pro Gramm auf, die sich durch eine Temperaturbehandlung auf gewünschte niedrigere Werte einstellen läßt.

Des weiteren haben nach der Lehre der Erfindung hergestellte Katalysatorsysteme den Vorteil, daß ihre poröse Struktur bis 1000°, die Partikelgröße und die Rieselfähigkeit bis 1200°C erhalten bleiben. Durch Vermahlen läßt sich eine bestimmte Partikelgröße einstellen und die Schüttdichte von ca. 0,6 gr pro cm$^3$ weiter steigern. Nach Bedarf kann das Pulver noch zu Pellets oder Tabletten verarbeitet werden und ermöglicht somit vielseitige Anwendungen derartiger Katalysatorsysteme.

Das Aufbringen der katalytisch aktiven Komponente oder deren Vorstufe kann auf chemischem oder physikalischem Weg durch Imprägnieren erfolgen. Wird das Trägermaterial beispielsweise mit einer sauren Lösung von Zirkondioxid, Titandioxid etc. versetzt, so wird durch Einstellen des entsprechenden pH-Wertes eine unlösliche Bindung zu den freien OH-Gruppen des Siliziumdioxids erreicht. So erhaltene Katalysatorsysteme werden auch Fällungskatalysatoren genannt.

Durch Reaktion der freien OH-Gruppen mit koordinationsfähigen Gruppen wie Aminen oder Phosphinen, welche wiederum Metallverbindungen durch Ligandenaustauschreaktionen komplexartig binden können, lassen sich weitere aktive Komponenten am Träger fixieren.

Das saure Verhalten des reinen Siliziumdioxidmaterials in wäßrigem Medium ermöglicht eine Fixierung von kationischen Komplexen, beispielsweise den Chlormetallkomplexen von Metallen aus den Nebengruppen 7a, 8 und 1b des Periodensystems.

In vielen Fällen muß der Katalysator noch aktiviert werden, das heißt, eine am Träger fixierte Vorstufe durch chemische Umsetzung in die katalytisch wirksame Komponente überführt werden. Dies kann beispielsweise durch trockene thermische Behandlung unter oxidierenden oder reduzierenden Bedingungen ($O_2$-bzw. $H_2$-Atmosphäre) geschehen.

Im folgenden wird eine Möglichkeit zur Darstellung des Trägermaterials nach der Lehre der Erfindung beschrieben. Als Ausgangsmaterial dient bergmännisch abgebauter Quarzsand, der mit Zuschlägen von Aluminiumoxid, Boroxid und Karbonaten von Alkali und Erdalkalimetallen durch Schmelzen in eine homogene Glasphase überführt wird, wobei der Gehalt an $SiO_2$ in der Schmelze auf 50 bis 70 Gewichtsprozent eingestellt wird. Mittels einer Faserziehanlage werden aus der Schmelze Glasfasern mit einheitlichem Durchmesser kleiner 500 μm hergestellt und diese einem Auslaugprozeß in mindestens 95°C heißer Mineralsäure (vorzugsweise 3n-6n Salzsäure) unterzogen und anschließend säurefrei gewaschen. Durch dieses Auslaugen werden die Verunreinigungen und Zuschläge aus der Glasmatrix herausgelöst, so daß ein hochreines poröses Siliziumdioxid verbleibt.

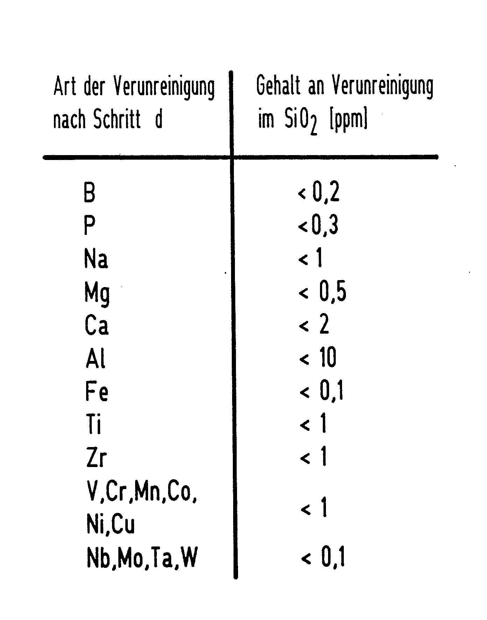

Die in Figur 1 dargestellte Tabelle zeigt die geringen Verunreinigungen eines nach dieser Methode hergestellten $SiO_2$.

Die ausgelaugten Fasern von ca. 5 bis 10 μm Durchmesser bleiben in ihrer Makrostruktur erhalten. Sie weisen eine hohe BET-Oberfläche von ca. 180 m² pro Gramm auf, die sich für verschiedene Anwendungen durch Tempern (größer 1200°C) reduzieren läßt und somit eine geringere Belegung mit katalytisch aktiver Komponente erlaubt.

Der fertige Katalysator, das heißt der mit katalytisch aktiver Komponente präparierte Katalysatorträger, kann vermahlen und zu Tabletten, Granulat etc. verarbeitet aufgrund seiner hohen Temperaturbeständigkeit vielfältigen Verwendungen zugeführt werden, beispielsweise als DENOX-Katalysator (zur Entfernung von Stickoxiden), zur Rauchgasentgiftung oder zum Einsatz in katalytisch geführten Reaktionen der chemischen Industrie.

## Ansprüche

1. Heterogenes Katalysatorsystem, bestehend aus einer katalytisch wirksamen Komponente und einem, eine große Oberfläche aufweisenden, porösen Siliziumdioxid-Trägermaterial, **dadurch gekennzeichnet**, daß das Trägermaterial ein aus Glaskörpern großer Oberfläche durch Auslaugen mit Mineralsäure hergestelltes hochreines Siliziumdioxid ist.

2. Verfahren zum Herstellen eines Katalysatorsystems gemäß Anspruch 1, **dadurch gekennzeichnet**, daß

a) als Ausgangsmaterial siliziumdioxidhaltige Mineralien verwendet werden, die mit glasbildenden Zuschlägen von Aluminiumoxid und Karbonaten und/oder Oxiden von Alkali-und Erdalkalimetallen durch Schmelzen in eine homogene Glasphase überführt werden,

b) aus der Glasschmelze Glaskörper großer Oberfläche hergestellt werden,

c) die Glaskörper einem Auslaugprozeß in mindestens 95°C heißer Mineralsäure unterworfen werden,

d) das entstandene poröse Material säurefrei gewaschen wird, und

e) mit einer katalytisch wirksamen Komponente oder einer Vorstufe davon präpariert wird.

3. Verfahren nach Anspruch 2, **dadurch gekennzeichnet**, daß die Glaskörper nach Verfahrensschritt b) durch Herstellung von Glasfasern mit einem einheitlichen Durchmesser von kleiner 500 μm, vorzugsweise zwischen 5 und 10 μm, erzeugt werden.

4. Verfahren nach Anspruch 2, **dadurch gekennzeichnet**, daß als Ausgangsmaterial bergmännisch abgebauter Quarzsand und als Zuschläge außer Aluminiumoxid und/oder Boroxid die Oxide bzw. Karbonate von Natrium und Kalzium verwendet werden.

5. Verfahren nach einem der Ansprüche 2 bis 4, **dadurch gekennzeichnet,** daß gemäß Verfahrensschritt a) der Gehalt an Siliziumdioxid in der Glasschmelze auf einen Bereich zwischen 50 und 70 Gewichtsprozent eingestellt wird.

6. Verfahren nach einem der Ansprüche 2 bis 5, **dadurch gekennzeichnet,** daß die Präparierung des porösen Materials gemäß Verfahrensschritt e) durch Eintauchen in Lösungen oder Schmelzen erfolgt, die die katalytisch wirksame Komponente oder eine Vorstufe davon enthalten.

7.Verfahren nach einem der Ansprüche 2 bis 5, **dadurch gekennzeichnet,** daß gemäß Verfahrensschritt e) die katalytisch wirksame Komponente durch chemische Reaktion mit freien Si-OH-Gruppen, beispielsweise durch Veresterung, Kondensation oder Substitution auf dem Trägermaterial fixiert wird.

8. Verfahren nach Anspruch 7, **dadurch gekennzeichnet,** daß gemäß Verfahrensschritt e) die Fixierung der katalytisch aktiven Komponente in Lösung und durch Einstellen eines bestimmten pH-Wertes erfolgt.

9. Verfahren nach einem der Ansprüche 2 bis 8, **dadurch gekennzeichnet,** daß im Anschluß an die Verfahrensschritte a) bis e) das Katalysatorsystem vermahlen und dann zu größeren Formkörpern verarbeitet wird.

10. Verwendung des Katalysator-Trägermaterials nach Anspruch 1 ohne zusätzliche katalytisch wirksame Komponente als saurer Katalysator.

| Art der Verunreinigung nach Schritt d | Gehalt an Verunreinigung im $SiO_2$ [ppm] |
|---|---|
| B | < 0,2 |
| P | < 0,3 |
| Na | < 1 |
| Mg | < 0,5 |
| Ca | < 2 |
| Al | < 10 |
| Fe | < 0,1 |
| Ti | < 1 |
| Zr | < 1 |
| V,Cr,Mn,Co, Ni,Cu | < 1 |
| Nb,Mo,Ta,W | < 0,1 |